# EUROPEAN PATENT SPECIFICATION

(11) **EP 1 255 477 B1**
(45) Date of publication and mention of the grant of the patent: **14.01.2004**
(21) Application number: 01948928.5
(22) Date of filing: 31.01.2001
(51) Int. Cl.: A47J 27/212

(54) **INDICATOR FOR LIQUID HEATING APPLIANCES**
ANZEIGEVORRICHTUNG FUR WASSERERHITZUNGSGERATE
INDICATEUR POUR APPAREILS DE CHAUFFAGE DE LIQUIDES

(30) Priority: 03.02.2000 GB 0002488
(43) Date of publication of application: 13.11.2002
(73) Proprietor: OTTER CONTROLS LIMITED, Buxton, Derbyshire SK17 6LA (GB)
(72) Inventor: O'NEILL, Robert Andrew, Buxton, Derbyshire SK17 9NQ (GB)
(74) Representative: Milhench, Howard Leslie
(86) International application number: PCT/GB2001/000392
(87) International publication number: WO 2001/056438

(56) References cited:
- WO-A-99/48331
- DE-A- 3 904 859
- DE-A- 19 652 829
- GB-A- 2 185 161
- GB-A- 2 332 522

## Description

### Field of the Invention:

This invention concerns improvements relating to liquid heating appliances and more particularly concerns electrically heated water boiling appliances such as kettles and hot water jugs and the like. The invention relates to the provision of means for indicating to the user of such an appliance the status of the appliance. A liquid heating appliance according to the preamble of claim 1 in known from GB-A-2 332 522.

### Background of the Invention:

Electric kettles and hot water jugs commonly include controls for switching off or reducing the power to the heating element of the appliance when water boils in the appliance and also for protecting the appliance against heating element overtemperatures caused, for example, by switching on the appliance without first filling it with water. Such controls commonly employ bimetallic actuators set to respond to predetermined sensed temperatures, though electronic controls have also been proposed (see, for example, GB-A-2 228 634).

Small indicator lamps have commonly been provided in kettles and hot water jugs to indicate the status of the controls. Thus, for example, an indicator light may be associated with a boil sensing control, the light being switched off in response to operation of the control when the water in the appliance boils. A further indicator light may be associated with an element protector (overtemperature) control, the light being switched on to provide a warning to a user of the appliance in the event of the heating element of the appliance overheating and the element protector control operating to switch off the appliance. Small neon bulbs (lamps) are commonly employed as such indicators, though LED's have also been proposed in GB-A-2 228 634 which further proposes the use of indicators for other purposes such as to indicate the heating of water to a sub-boiling temperature better suited to making coffee or to indicate the build-up of scale on the appliance heating element.

Whereas bimetallic controls in kettles and hot water jugs readily enable the provision of some basic status indications, electronic controls provide increased possibilities, as is evident from GB-A-2 228 634. If the electronic control contains a logic element, functions other than simple automatic (switch off on boil) operation and dry boil (switch on empty) protection can readily be provided at little extra cost and all manner of status indications, timing and warning functions can readily be accommodated. Whilst electronic controls have not been competitive with bimetallic controls on account of their much higher cost, their ability to provide additional functions at little or no added cost narrows the competitive advantage of bimetallic controls.

### Objects and Summary of the Invention:

It is the object of the present invention to provide a means of redressing the competitive balance in favour of bimetallic controls.

According to the present invention (cf. claim 1), an electric kettle or hot water jug or the like has an indicator comprising a series of light emitters which are arranged to be lit progressively as liquid is heated in the appliance. The effect of such an indication would be to provide a user with a measure of the progress of the heating of the appliance to boiling and of the time remaining before boiling is achieved, either as a function of the rate at which the light emitters were lit or as a function of the number of light emitters yet to be lit. Such an indication is believed to be useful and attractive to the user.

The series of light emitters are preferably arranged so that they collectively provide a unitary display area which is progressively illuminated. For example, the light emitters could be arranged in line, not necessarily a straight line, so that the progression of heating to boiling could be observed as the lit emitters advanced down the line. Ideally the light emitters would provide different colour outputs, for example green at low temperatures progressing through yellow or orange to red as the appliance heats to boiling. The sizes of the light emitters could increase throughout the series, so that the red, hot indication was more prominent than the green, cold indication, this being a useful reinforcement of the warning provided to the user by the red indication that the appliance contains hot, possibly scalding liquid.

The indicator proposed to be provided in accordance with the present invention could be additional to or integrated with other indicators provided on the appliance. For example, an appropriate warning indicator, additional to the heating progression indicator of the invention, could be associated with a dry boil element protector control and would be lit quickly in the event of the appliance being switched on empty.

The series of light emitters could for example be constituted by multi-element LED arrays such as the 10 element bargraph modules (vertical or horizontal) which are available from RS Components Ltd and include monolithic integrated circuit display drivers which light successive LEDs as an analogue input voltage level increases past prescaled threshold points. For developing an appropriate analogue input voltage which varies as a function of temperature, the heating element of the liquid heating appliance merely has to have associated therewith appropriate temperature responsive means for developing such a voltage. In the appliance according to the invention where the heating element of the appliance is of the thick film type, such means conveniently comprise a resistance element having an appropriate temperature coefficient of resistance, such resistance elements being well known, printed on the heating element. Alternatively a discrete temperature responsive resistance element could be utilized.

The display that the present invention proposes to provide, particularly when multi-coloured, can advantageously be employed to illuminate the liquid column in a level indicating sight glass of the appliance so that it changes colour as the water is heated. Alternatively, the light from the display could illuminate the main body of liquid in the appliance and a large, transparent or translucent wall area could be provided which acts as a sight glass window. The effect of this would be a glowing volume of water which changes colour as it heats up.

The foregoing and other features of the present invention are set forth in the appended claims and will be clearly understood by consideration of the following description of exemplary embodiments which are illustrated in the accompanying drawings.

### Description of the Drawings:

Figure 1 is a schematic circuit diagram of a first exemplary embodiment of the invention; and
Figure 2 is a schematic circuit diagram of a second exemplary embodiment of the invention.

### Detailed Description of the Embodiments:

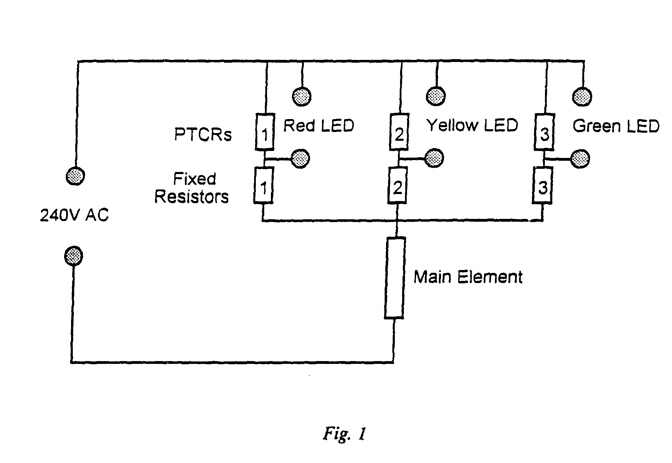

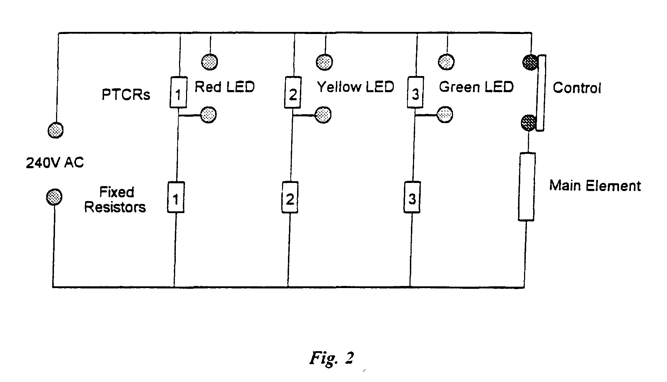

Before considering in detail the embodiments of Figures 1 and 2, a discussion of preferred means of achieving the desired display will first be provided. According to a first possibility, a thick film heating element has a PTCR (a linear coefficient, not a Curie type device) section placed in series with the main heater track, or a part of it, the PTCR section having a low power density so that its temperature is closely related to the water temperature rather than being at an elevated temperature as is the main track. The voltage drop across this section would be no more than 5 volts, possibly as low as 1 volt, so that any resistance change in the section would have an insignificant effect on the power of the heating element. The PTCR would have a temperature coefficient of resistance of at least 5000 parts per million, to give a significant change in resistance over the 80° temperature rise between cold and boiling. A 6000 ppm coefficient would give roughly a 50% rise in resistance, and hence a 50% rise in voltage. This voltage is then passed to a multi-element LED display as mentioned hereinbefore to progressively turn on the lamps from green through to red as the water temperature rises. A further red LED with a switch-on voltage arranged to correspond to a temperature above 100°C could be placed in parallel with the LED display to give an indication of dry boil. Alternatively, as described, a linear PTCR is placed on the track. The output voltage obtained from the PTCR is fed to a logic device, such as an ASIC, which provides an output at terminals connected to a series of LEDs to switch them on, either one at a time and switching off the previous light or in sequence and leaving the previous lights lit, as the temperature rises. A rate sensor in the logic device could detect the onset of dry boil by detecting an abnormally high rate of rise, and could switch on a red warning light much earlier than in the first possibility.

A disadvantage of the above proposals is that the cost of the integrated ladder LED displays is quite high. A standard LED array without integrated logic is also available from RS Components Ltd and could be used by incorporating a number of tapping points on the printed heating element, the temperatures at which the LEDs light being set by the relative voltages at these tapping points. With this system it would be more difficult to arrange for the LEDs to be extinguished as the next in the sequence was lit, but this is not essential and it may in fact be preferable to the user that they are not. The circuit diagram of Figure 1 shows a simple layout wherein a thick film heating element has a main track portion in series with three parallel connected sections, each constituting a potential divider formed as a fixed resistance in series with a PTCR which provide output voltages to the LEDs. The values of the fixed resistances and the characteristics of the PTCRs are chosen so that the green LED would come on almost immediately on switch on of the appliance to show the water starting to warm up, the yellow one at around 40-50°C and the red one somewhere above 90°C, these being the temperatures at which the respective output voltages reach the striking voltages of the LEDs.

The circuit arrangement shown in Figure 1 would only illuminate the LEDs when the heating element was energised. This would not give any indication of hot water or dry boil after the element switched off. To overcome this the PTCR/fixed resistor arrangement could be placed in parallel with the main element and arranged to be supplied whenever the appliance was connected to the supply. In such an arrangement the fixed resistors would have much higher values to limit the power dissipated by the system, but in other respects the system would be very similar to that of Figure 1. Figure 2 shows a possible circuit, for which suitable values around 80 Ohms for the PTCR and 7.4 kOhms for the main resistance would switch on a 2.2V LED at about 60°C. It should be noted that this version would give a much lower (about half) change in output voltage because of the lower currents used, and therefore would be much more sensitive to tolerance variations in the printed track resistances and the LED strike voltages.

Although, it would be cheapest to simply print the PTC resistors on the thick film printed element, the limitations of available materials might create the tolerance problems referred to above. For the additional cost of a discrete PTCR, possibly a Curie type device with a suitable anomaly temperature or one with a higher coefficient, the tolerance problem could be reduced.

As mentioned hereinbefore, the coloured light sequence could be used to illuminate the liquid column in a sight glass so that it changed colour as the water was heated. An extension of this would be to shine the light into the main body of water in the jug or kettle body, and provide a large transparent wall area which acts as a sight glass window. An example of such a window may be seen on the Pifco Millennium jug, and many manufacturers are now using large transparent areas in this way. The effect would be to provide a glowing body of water whose colour changes as it heats up, which is a potentially attractive feature.

The invention having been described in the foregoing by reference to specific embodiments, it is to be well understood that the embodiments are exemplary only and that modifications and variations are possible without departure from the scope of the invention as defined in the claims.

## Claims

1. A liquid heating appliance having an indicator in the form of a series of light emitters which are arranged to be lit progressively as liquid is heated in the appliance, **characterised by** the appliance having a thick film heating element with temperature dependent resistances formed thereon and the different light emitters being arranged to be lit in response to the development of different voltages by said temperature dependent resistances as the temperature changes in use of the appliance

2. An appliance as claimed in claim 1 wherein the light emitters provide different colour outputs.

3. An appliance as claimed in claim 1 or 2 which is provided with an electromechanical boil sensing and/or heating element overtemperature protection control.

4. An appliance as claimed in claim 3 wherein said control(s) include(s) a bimetallic actuator.

5. An appliance as claimed in any preceding claim wherein said light emitters are arranged to illuminate the liquid column in a sight glass of the appliance.

6. An appliance as claimed in any of claims 1 to 4 wherein said light emitters are arranged to illuminate the liquid contents of the appliance, and at least a portion of the wall of the appliance is transparent or translucent.

## Patentansprüche

1. Flüssigkeitsheizgerät mit einer Anzeigevorrichtung in Form einer Reihe von Lichtemittern, die dazu ausgelegt sind, gemäß dem Fortschritt der Flüssigkeitserhitzung in dem Gerät zu leuchten,
**dadurch gekennzeichnet, daß**
das Gerät ein Dickfilmheizelement mit darauf ausgebildeten temperaturabhängigen Widerständen aufweist, und
die unterschiedlichen Lichtemitter dazu ausgelegt sind, als Reaktion auf die Entwicklung von verschiedenen Spannungen durch die temperaturabhängigen Widerstände, wenn sich die Temperatur während der Benutzung des Geräts ändert, zu leuchten.

2. Gerät nach Anspruch 1, wobei die Lichtemitter verschiedene Farbausgaben bereitstellen.

3. Gerät nach Anspruch 1 oder 2, bei dem eine elektromechanische Kochsensor- und/oder eine Heizelementüberhitzungsschutz-Steuerung vorgesehen ist.

4. Gerät nach Anspruch 3, wobei die Steuerung(en) einen bimetallischen Aktuator aufweist bzw. aufweisen.

5. Gerät nach einem der vorhergehenden Ansprüche, wobei die Lichtemitter dazu ausgelegt sind, die Flüssigkeitssäule in einem Sichtglas des Geräts zu beleuchten.

6. Gerät nach einem der Ansprüche 1 bis 4, wobei die Lichtemitter dazu ausgelegt sind, den Flüssigkeitsinhalt des Geräts zu beleuchten und mindestens ein Teil der Gerätewand transparent oder lichtdurchlässig ist.

## Revendications

1. Appareil de chauffage d'un liquide possédant un indicateur sous la forme d'une série d'éléments électroluminescents qui sont agencés de façon à s'allumer progressivement au fur et à mesure que le liquide est chauffé dans l'appareil, **caractérisé en ce que** l'appareil possède un élément chauffant sous la forme d'un film épais, muni de résistances dépendantes de la température formées sur celui-ci, et les différents éléments électroluminescents étant agencés pour s'allumer en réponse à l'application de différentes tensions par lesdites résistances dépendantes de la température, au fur et à mesure que la température change, au cours de l'utilisation de l'appareil.

2. Appareil selon la revendication 1, dans lequel les éléments électroluminescents fournissent des sorties de différente couleur.

3. Appareil selon la revendication 1 ou 2, qui est muni d'une commande de protection contre la surchauffe de l'élément chauffant et/ou de détection d'ébullition électromécanique.

4. Appareil selon la revendication 3, dans lequel ladite (lesdites) commande(s) comporte(nt) un actionneur bimétallique.

5. Appareil selon l'une quelconque des revendications précédentes, dans lequel lesdits éléments électroluminescents sont agencés pour éclairer la colonne de liquide dans un voyant transparent de l'appareil.

6. Appareil selon l'une quelconque des revendications 1 à 4, dans lequel lesdits éléments électroluminescents sont agencés pour éclairer le contenu liquide de l'appareil, et, au moins une partie de la paroi de l'appareil est transparente ou translucide.
